# EUROPEAN PATENT APPLICATION

(11) **EP 4 498 561 A1**
(43) Date of publication of application: **29.01.2025**
(21) Application number: 22943122.6
(22) Date of filing: 25.05.2022
(51) Int. Cl.: H02J 7/00, H01M 10/44

(54) **BATTERY SYSTEM AND CONTROL METHOD THEREFOR, AND ELECTRIC APPARATUS AND ELECTRONIC DEVICE**

(71) Applicant: Contemporary Amperex Technology Co., Limited, Ningde, Fujian 352100 (CN)
(72) Inventor: WANG, Dailing, Ningde, Fujian 352100 (CN); WANG, Shengwei, Ningde, Fujian 352100 (CN); WANG, Tiansheng, Ningde, Fujian 352100 (CN)
(74) Representative: Ziebig Hengelhaupt Intellectual Property Attorneys Patentanwaltskanzlei PartGmbB
(86) International application number: PCT/CN2022/095051
(87) International publication number: WO 2023/225917

(57) **Abstract**

The present application provides a battery system, a control method thereof, an electrical device, an electronic device, and a non-transitory computer-readable storage medium. The battery system, includes: a first output terminal and a second output terminal; a first battery and a second battery, in which, a first electrode of the first battery and a first electrode of the second battery are connected to the first output terminal, a second electrode of the first battery and a second electrode of the second battery are connected to the second output terminal; and a first unidirectional conduction element and a second unidirectional conduction element, in which, one electrode of the first battery is connected to the first output terminal or the second output terminal corresponding to the one electrode of the first battery through the first unidirectional conduction element; and one electrode of the second battery is connected to the first output terminal or the second output terminal corresponding to the one electrode of the second battery through the second unidirectional connection element. In a loop formed between the first battery, the second battery, the first output terminal, and the second output terminal, a conduction direction of the first unidirectional conduction element is opposite to a conduction direction of the second unidirectional conduction element.

## Description

### TECHNICAL FIELD

The present application relates to the field of battery technology, and more particularly to a battery system, a control method for the battery system, an electrical device, an electronic device, and a non-transitory computer-readable storage medium.

### BACKGROUND

With the rapid development of clean energy and the country's policy support to the new energy field, power batteries having high voltage, high energy density, and long cycle life have attracted much attention. Power batteries are not only used in energy storage power systems, such as hydraulic, thermal, wind and solar power plants, but also widely used in electric vehicles, such as electric bicycles, electric motorcycles, electric vehicles, as well as military equipment, aerospace, and other fields.

In an electric vehicle, a power battery provides an electric energy to drive the vehicle to travel. The existing electric vehicle market is becoming more and more diversified, and customers also have different needs for the cruising range. In order to meet the needs of the customers, a power-up circuit is currently formed through parallel battery technology. In some cases, the parallel battery technology adopts the parallel connection of batteries directly to form the power-up circuit. However, such technical solution is disadvantageous in that a voltage difference occurring between the batteries at the moment of parallel connection will generate a circulating current in the loop formed by the batteries in parallel connection; and when the quantity of electricity is high, the overcharge of the battery is resulted, which not only reduces the service lives of the batteries, but also causes safety issues.

### SUMMARY

The present application aims to at least solve one of the technical problems existing in the prior art. Therefore, it is an object of the present application to provide a battery system, a control method for the battery system, an electrical device, an electronic device, and a non-transitory computer-readable storage medium, so as to alleviate the adverse effects of the circulating current on the batteries.

Embodiments of the first aspect of the present application provide a battery system. The battery system comprises: a first output terminal and a second output terminal; a first battery and a second battery, in which, a first electrode of the first battery and a first electrode of the second battery are connected to the first output terminal, a second electrode of the first battery and a second electrode of the second battery are connected to the second output terminal; and a first unidirectional conduction element and a second unidirectional conduction element, in which, one electrode of the first battery is connected to the first output terminal or the second output terminal corresponding to the one electrode of the first battery through the first unidirectional conduction element; and one electrode of the second battery is connected to the first output terminal or the second output terminal corresponding to the one electrode of the second battery through the second unidirectional connection element. The first unidirectional conduction element has a first conduction direction in a loop formed between the first output terminal and the second output terminal, the second unidirectional conduction element has a second conduction direction in the loop formed between the first output terminal and the second output terminal, and the first conduction direction is opposite to the second conduction direction.

In the technical solutions of embodiments of the present application, the first unidirectional conduction element or the second unidirectional conduction element can be used to prevent the formation of circulating current between first battery and the second battery in parallel connection, prevent the battery from being overcharged, improve the service lives of the batteries, and reduce the safety hazard during the use of the battery. Moreover, the first unidirectional conduction element and the second unidirectional conduction element will not affect the parallel connection of the first battery and the second battery to provide electric energy, and the circuit structure is simple and easy to implement.

In some embodiments, the battery system further comprises: a first switch and a second switch. One electrode of the first battery is connected to the first output terminal or the second output terminal corresponding to the one electrode of the first battery via the first switch. One electrode of the second battery is connected to the first output terminal or the second output terminal corresponding to the one electrode of the second battery via the second switch. In case that the first switch and the second switch are turned on, the first battery and the second battery are enabled to be connected in parallel. By using the first switch and the second switch to control the connection state of the first battery and the second battery, different power-up circuits can be realized, for example, a single battery supplies power, or the first battery and the second battery supply power in parallel.

In some embodiments, the battery system further comprises: a third switch. One end of the third switch is connected to the second electrode of the first battery, and the other end of the third switch is connected to the first electrode of the second battery. In case that the third switch is turned on, the first battery and the second battery are enabled to be connected in series. By using the third switch to control the connection state of the first battery and the second battery, different power-up circuits can be realized, for example, the charging of the first battery and the second battery in series can improve the charging efficiency.

In some embodiments, one end of the third switch is connected to the first output terminal through the first battery and the first unidirectional conduction element, and the other end of the third switch is connected to the second output terminal through the second battery and the second unidirectional conduction element. In case that the third switch is turned on, the first unidirectional conduction element, the first battery, the third switch, the second battery, and the second unidirectional conduction element are connected in series. By using the third switch to control the connection state of the first battery and the second battery, different power-up circuits can be realized, for example, the charging of the first battery and the second battery in series can improve the charging efficiency.

In some embodiments, the battery system further comprises: a fourth switch, connected in parallel with the first unidirectional conduction element, and configured for short-circuiting the first unidirectional conduction element; and/or a fifth switch, connected in parallel with the second unidirectional conduction element, and configured for short-circuiting the second unidirectional conduction element. By using the fourth switch and the fifth switch to control the connection state of the first battery and the second battery, it can be realized different power-up circuits, for example, charging of the first battery and the second battery in series connection, charging of the first battery and the second battery in parallel connection, the power supply in parallel connection that avoids the circulating current, the power supply in parallel connection that allows mutual charging of the circulating current and brake back charging.

In some embodiments, the first unidirectional conduction element and/or the second unidirectional conduction element comprise one or more of a diode, a thyristor, and an insulated gate bipolar transistor. Utilizing the unidirectional conduction function of the first unidirectional conduction element and/or the second unidirectional conduction element, the formation of a circulating current between the first battery and the second battery connected in parallel can be prevented if necessary.

The embodiment of the second aspect of the present application provides a control method of a battery system. The battery system comprises: a first output terminal, a second output terminal, a first battery, a second battery, the first unidirectional conduction element, and the second unidirectional conduction element. The control method comprises: controlling the first battery and the second battery to be connected in parallel between the first output terminal and the second output terminal. A first electrode of the first battery and a first electrode of the second battery are connected to the first output terminal, and a second electrode of the first battery and a second electrode of the second battery are connected to the second output terminal. The first battery and the first unidirectional conduction element are connected in series between the first output terminal and the second output terminal. The second battery and the second unidirectional conduction element are connected in series between the first output terminal and the second output terminal. The first unidirectional conduction element has a first conduction direction in a loop formed between the first output terminal and the second output terminal, the second unidirectional conduction element has a second conduction direction in the loop formed between the first output terminal and the second output terminal, and the first conduction direction is opposite to the second conduction direction.

In some embodiments, the battery system further comprises: a first switch and a second switch. One electrode of the first battery is connected to the first output terminal or the second output terminal corresponding to the one electrode of the first battery via the first switch. One electrode of the second battery is connected to the first output terminal or the second output terminal corresponding to the one electrode of the second battery via the second switch. The step of controlling the first battery and the second battery to be connected in parallel between the first output terminal and the second output terminal comprises: turning on the first switch and the second switch to enable the first battery and the second battery to be connected in parallel.

In some embodiments, the battery system further comprises: a third switch. One end of the third switch is connected to the second electrode of the first battery, and the other end of the third switch is connected to the first electrode of the second battery. The control method further comprises: turning on the third switch to enable the first battery and the second battery to be connected in series.

In some embodiments, the battery system further comprises a fourth switch and a fifth switch. The fourth switch is connected in parallel with the first unidirectional conduction element, and the fifth switch is connected in parallel with the second unidirectional conduction element. The control method further comprises: turning on the fourth switch to short-circuit the first unidirectional conduction element; and/or turning on the fifth switch to short-circuit the second unidirectional conduction element.

In some embodiments, the battery system further comprises: a first switch, a second switch, a third switch, a fourth switch, and a fifth switch. One electrode of the first battery is connected to the first output terminal or the second output terminal corresponding to the one electrode of the first battery via the first switch. One electrode of the second battery is connected to the first output terminal or the second output terminal corresponding to the one electrode of the second battery via the second switch. One end of the third switch is connected to the first output terminal through the first battery and the first unidirectional conduction element, and the other end of the third switch is connected to the second output terminal through the second battery and the second unidirectional conduction element. The fourth switch is connected in parallel with the first unidirectional conduction element, and the fifth switch is connected in parallel with the second unidirectional conduction element. The control method further comprises: in response to that the first switch and the second switch are turned on and the third switch is turned off to enable the first battery and the second battery to be connected in parallel, and that a quantity of electricity of the battery system is determined to be less than a preset threshold, turning on the fourth switch to short-circuit the first unidirectional conduction element, and turning on the fifth switch to short-circuit the second unidirectional conduction element.

In some embodiments, the control method further comprises: in response to determination of the battery system to satisfy a charging condition, turning off the first switch and the second switch and turning on the third switch to enable the first battery and the second battery to be in series connection, and turning on the fourth switch and the fifth switch to charge the battery system.

In some embodiments, the battery system further comprises: a first switch, a second switch, a third switch, a fourth switch, and a fifth switch. One electrode of the first battery is connected to the first output terminal or the second output terminal corresponding to the one electrode of the first battery via the first switch. One electrode of the second battery is connected to the first output terminal or the second output terminal corresponding to the one electrode of the second battery via the second switch. One end of the third switch is connected to the first output terminal through the first battery and the first unidirectional conduction element, and the other end of the third switch is connected to the second output terminal through the second battery and the second unidirectional conduction element. The fourth switch is connected in parallel with the first unidirectional conduction element, and the fifth switch is connected in parallel with the second unidirectional conduction element. The control method further comprises: in response to that the first switch and the second switch are turned on and the third switch is turned off to enable the first battery and the second battery to be connected in parallel, and that a quantity of electricity of the battery system is determined to be greater than or equal to a preset threshold, turning off the fourth switch and the fifth switch.

Embodiments of the third aspect of the present application provide an electrical device, which comprises the battery system in the above embodiments, and the battery system is configured for providing an electric energy.

In some embodiments, the electrical device is a vehicle.

Embodiments of the fourth aspect of the present application provide an electronic device. The electronic device comprises: at least one processor; a memory, in communication connection with the at least one processor. The memory stores a computer program, which, when being executed by the at least one processor, enables the control method according to the above embodiments to be implemented.

Embodiments of the fifth aspect of the present application provide a non-transitory computer-readable storage medium storing a computer program, which, when being executed by a processer, causes the control method according to the above embodiments to be implemented.

The above description is only a summary of the technical solutions of the present application. To make the technical means of the present application better understood and implemented according to the contents of the description, and in order to make the above and other purposes, features and advantages of the present application more obvious and understandable, the specific embodiments of the present application are described in details hereinbelow.

### BRIEF DESCRIPTION OF THE DRAWINGS

Upon reading the following detailed description of the preferred embodiments, other advantages and benefits will become apparent to those skilled in the art. The drawings are only for the purpose of illustrating the preferred embodiments and are not to be considered as limiting the application. Moreover, same reference numerals are used to denote the same components throughout the drawings. In the attached figures:
FIG. 1 is a schematic circuit diagram of a battery system in some cases;
FIG. 2 is a schematic diagram of a circulating current of the battery system in some cases;
FIG. 3 is a schematic circuit diagram of a battery system according to some embodiments of the present application;
FIG. 4 is a schematic circuit diagram of a battery system according to some embodiments of the present application;
FIG. 5 is a schematic circuit diagram of a battery system according to some embodiments of the present application;
FIG. 6 is a schematic circuit diagram of a battery system according to some embodiments of the present application;
FIG. 7 is a schematic circuit diagram of a battery system according to some embodiments of the present application.

Explanations of reference numerals are as follows:
P1: First battery; P2: Second battery; E1: First output terminal; E2: second output terminal;
K1: First switch; K2: Second switch; K3: Third switch; K4: Fourth switch; K5: Fifth switch;
D1: First unidirectional conduction element; and D2: Second unidirectional conduction element.

### DETAILED DESCRIPTION OF THE EMBODIMENTS

Embodiments of the technical solutions of the present application will be described in detail below in conjunction with the accompanying drawings. The following embodiments are only used to illustrate the technical solution of the present application more clearly, and therefore are only exemplary, rather than limiting the protection scope of the present application. Only those parts related to the technical solutions of the present application are shown schematically in the drawings, and do not represent their actual structure as products.

Unless otherwise defined, all technical and scientific terms used herein have the same meaning as commonly understood by those skilled in the art of the application; the terms used herein are only for the purpose of describing specific embodiments, and are not intended to limit the present application; the terms "comprising" and "having" and any variations thereof in the specification and claims of the present application and the description of the drawings are intended to cover a non-exclusive inclusion.

In the description of the embodiments of the present application, the technical terms "first" and "second" are only used to distinguish different objects, and should not be understood as indicating or implying relative importance or implicitly indicating the number, specific order, or primary-secondary relationship of the indicated technical parameters.

Reference to "embodiment" herein means that a specific parameter, structure, or feature described in connection with the embodiments may be included in at least one embodiment of the present application. The occurrences of this phrase in various places in the specification are not necessarily all referring to the same embodiment, nor are separate or alternative embodiments which are mutually exclusive of other embodiments. It is understood explicitly and implicitly by those skilled in the art that the embodiments described herein can be combined with other embodiments.

In the description of the embodiment of the present application, the term "and/or" is only an association relationship describing associated objects, which means that three kinds of relationships can be included, for example, A and/or B may mean the following conditions: A exists alone, both A and B exist at the same time, and B exists alone. In addition, the character "/" in this application generally indicates that the associated objects have an "or" relationship.

In the description of the embodiments of this application, the term "multiple" refers to more than two (including two), similarly, "multiple groups" refers to two or more groups (including two groups), and "multiple pieces" refers to is more than two pieces (including two pieces).

In the description of the embodiments of the present application, the technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate the orientation or positional relationship based on the drawing's orientation or positional relationship is only for the convenience of describing the embodiments of the present application and simplifying the description, and does not indicate or imply that the device or element referred to must have a specific orientation, be constructed, or operated in such a specific orientation, and therefore cannot be understood as an limitation to embodiments of the present application.

In the description of the embodiments of this application, unless otherwise clearly specified and limited, technical terms such as "installation", "connection", "attachment", "fixation", and the like should be interpreted in a broad sense, for example, it can be a fixed connection, or a detachable connection, or integration as a while; it can also be a mechanical connection, or an electrical connection; it can be a direct connection, or an indirect connection through a medium, and it can be the internal communication of two components or the interaction relationship between two components. Those skilled in the art can understand the specific meanings of the above terms in embodiments of the present application according to specific situations.

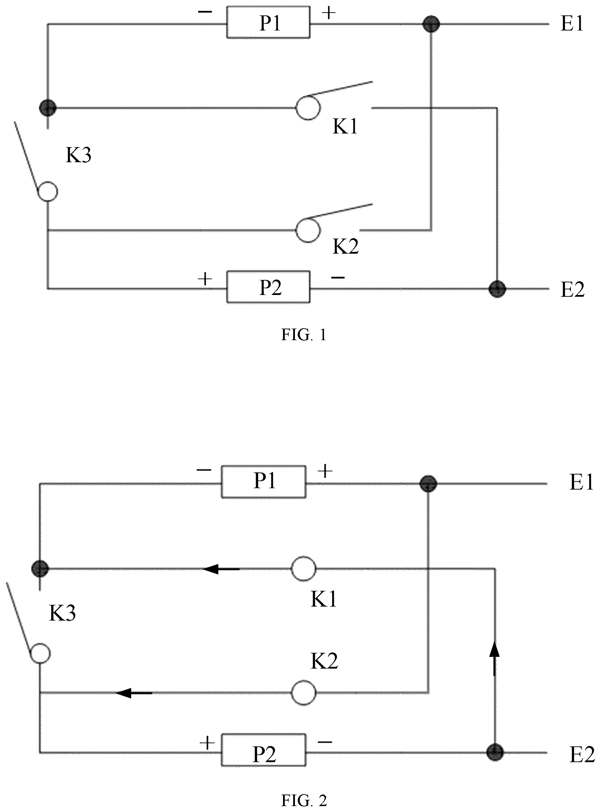

Referring to FIG. 1, which is a schematic circuit diagram of a battery system in some cases. In some cases, the battery system of an electric vehicle may comprise a first battery P1 and a second battery P2. The first battery P1 and the second battery P2 may be directly connected in parallel between the first output terminal E1 and the second output terminal E2, and connect the first output terminal E1 and the second output terminal E2 to, for example, a driver of an electric vehicle, so as to use the electric energy of the first battery P1 and the second battery P2 to drive the vehicle to move.

FIG. 2 is a schematic diagram of circulating current of a battery system in some cases. Referring to FIG. 2, the applicant has noticed that by directly connecting the first battery P1 and the second battery P2 in parallel to form a power-up circuit, a voltage difference may occur between the batteries at the moment of parallel connection (for example, the voltage of the first battery P1 is greater than the voltage of the second battery P2) to generate a circulating current in a loop formed by the first battery P1 and the second battery P2 (as shown by the arrow in FIF. 2), and when the quantity of electricity is high, the overcharge of the battery is resulted, which not only reduces the service lives of the batteries, but also causes safety issues.

In order to prevent the adverse effect of the circulating current on the batteries, applicant has found that unidirectional conduction elements can be introduced in the loop to prevent the circulating current. For example, two unidirectional conduction elements with opposite conduction directions are arranged in the loop to prevent the formation of a circulating current between the parallel-connected batteries.

In such a battery system, since the circulating current can be prevented by the unidirectional conduction element, the battery can be prevented from being overcharged, the service lives of the batteries can be improved, and the potential safety hazard when the battery is used can be reduced.

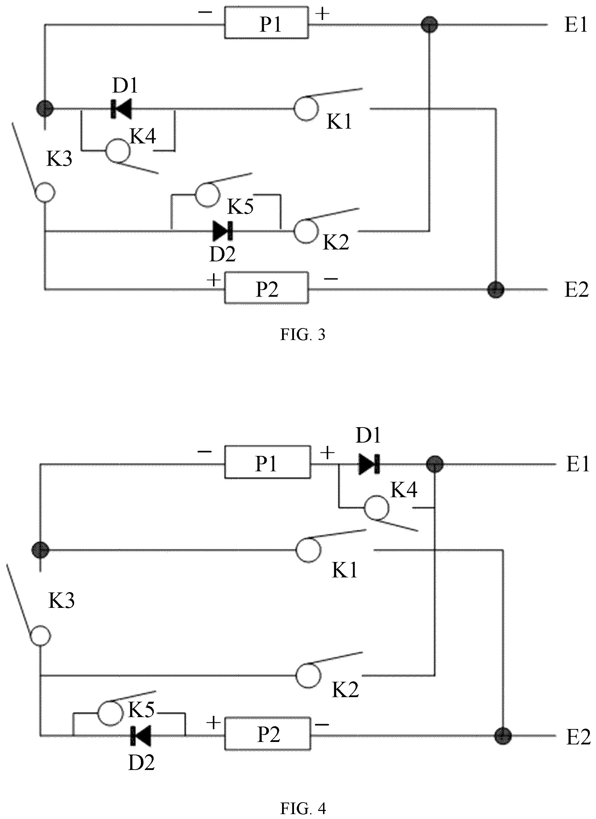

Referring to FIG. 3 and FIG. 4, which are schematic circuit diagrams of battery systems according to some embodiments of the present application, some embodiments of the present application provide a battery system. The battery system comprises: a first output terminal E1 and a second output terminal E2; a first battery P1 and a second battery P2, in which, a first electrode of the first battery P1 and a first electrode of the second battery P2 are connected to the first output terminal E1, and a second electrode of the first battery P1 and a second electrode of the second battery P2 are connected to the second output terminal E2, so that the first battery P1 and the second battery P2 can be connected in parallel; and a first unidirectional conduction element D1 and a second unidirectional conduction element D2, in which, one electrode of the first battery P1 is connected to the first output terminal E1 or the second output terminal E2 corresponding to the one electrode of the first battery P1 through the first unidirectional conduction element D1, so that the first unidirectional conduction element D1 and the first battery P1 can be connected in series between the first output terminal E1 and the second output terminal E2, and one electrode of the second battery P2 is connected to the first output terminal E1 or the second output terminal E2 corresponding to the one electrode of the second battery P2 through the second unidirectional connection element D2, so that the second unidirectional conduction element D2 and the second battery P2 can be connected in series between the first output terminal E1 and the second output terminal E2. The first unidirectional conduction element D1 has a first conduction direction in a loop formed between the first output terminal E1 and the second output terminal E2, and the second unidirectional conduction element D2 has a second conduction direction in the loop formed between the first output terminal E1 and the second output terminal E2, and the first conduction direction is opposite to the second conduction direction.

The first output terminal E1 and the second output terminal E2 can be connected with a load (for example, the driver of the electric vehicle) to provide electric energy for the load. The first output terminal E1 and the second output terminal E2 can also be connected with an external power supply to charge the first battery P1 and the second battery P2. In some embodiments, the first electrode of the first battery P1 and the first electrode of the second battery P2 can be positive; the second electrode of the first battery P1 and the second electrode of the second battery P2 can be negative (as shown in FIG. 3 and FIG. 4).

For ease of understanding, the first unidirectional conduction element D1 and the second unidirectional conduction element D2 are shown as diodes in FIGS. 3 and 4, but it should be understood that the first unidirectional conduction element D1 and the second unidirectional conduction element D2 can be any circuit element which can only allow the current to be turned on in one direction, or a combination thereof, such as a thyristor or an IGBT. The first unidirectional conduction element D1 may be connected between the first electrode of the first battery P1 and the first output terminal E1, or may be connected between the second electrode of the first battery P1 and the second output terminal E2. The second unidirectional conduction element D2 may be connected between the first electrode of the second battery P2 and the first output terminal E1, or may be connected between the second electrode of the second battery P2 and the second output terminal E2.

The loop formed between the first output terminal E1 and the second output terminal E2 may be a loop formed by the first battery P1, the second battery P2, the first output terminal E1, and the second output terminal E2. In some embodiments, the first conduction direction may be a direction that allows the current to flow from the first electrode of the first battery P1 to the first electrode of the second battery P2, and the second conduction direction may be a direction that allows the current to flow from the first electrode of the second battery P2 to the first electrode of the first battery P1. In other embodiments, the first conduction direction may be a direction that allows the current to flow from the first electrode of the second battery P2 to the first electrode of the first battery P1, and the second conduction direction may be a direction that allows the current to flow from the first electrode of the first battery P1 to the first electrode of the second battery P2.

It can be understood that since the first unidirectional conduction element D1 and the second unidirectional conduction element D2 are arranged in the loop of the first battery P1 and the second battery P2, and the conduction direction of the first unidirectional conduction element D1 is opposite to the conduction direction of the second unidirectional conduction element D1, so whenever the voltage of the first battery P1 is greater than the voltage of the second battery P2 or the voltage of the second battery P2 is greater than the voltage of the first battery P1, the circulating current and the overcharge of the batter caused by the circulating current can be prevented, which improves the service lives of the batteries, and reduces the potential safety hazard when the battery is used. Moreover, the first unidirectional conduction element D1 and the second unidirectional conduction element D2 will not affect the parallel connection of the first battery P1 and the second battery P2 to provide the electric energy, and the circuit structure is simple and easy to implement.

According to some embodiments of the present application, the battery system further comprises: a first switch K1 and a second switch K2. One electrode of the first battery P1 is connected to the first output terminal E1 or the second output terminal E2 corresponding to the one electrode of the first battery P1 via the first switch K1. One electrode of the second battery P2 is connected to the first output terminal E1 or the second output terminal E2 corresponding to the one electrode of the second battery P2 via the second switch K2. In case that the first switch K1 and the second switch K2 are turned on, the first battery P1 and the second battery P2 are enabled to be connected in parallel.

The first switch K1 may be connected between the first electrode of the first battery P1 and the first output terminal E1, or may be connected between the second electrode of the first battery P1 and the second output terminal E2. The second switch K2 may be connected between the first electrode of the second battery P2 and the first output terminal E1, or may be connected between the second electrode of the second battery P2 and the second output terminal E2.

By using the first switch K1 and the second switch K2 to control the connection state of the first battery P1 and the second battery P2, different power-up circuits can be realized, for example, when the first battery P1 is damaged (the second battery P2 is damaged), by turning on K1 and disconnecting K2 (disconnecting K1 and turning on K2), it is possible to realize power supply only through the first battery P1 (only through the second battery P2), so as to prevent the damaged battery from affecting the power-up circuit. Alternatively, the power supply of the first battery P1 and the second battery P2 in parallel connection can be realized by turning on the first switch K1 and the second switch K2. It can be understood that when only a single battery is used for power supply, the unidirectional conduction elements do not affect the normal operation of the battery; when two batteries are connected in parallel for power supply, the unidirectional conduction elements can prevent circulating current.

Referring to FIG. 3, according to some embodiments of the present application, the battery system further comprises: a third switch K3, one end of the third switch K3 is connected to the second electrode of the first battery P 1, and the other end of the third switch K3 is connected to the first electrode of the second battery P2. In case that the third switch K3 is turned on, the first battery P1 and the second battery P2 are enabled to be connected in series.

In some embodiments, the second electrode of the first battery P1 may be a negative electrode, and the first electrode of the second battery P2 may be a positive electrode (as shown in FIGS. 3 and 4).

By turning on the third switch K3 and turning off the first switch K1 and the second switch K2, a power-up circuit of the first battery P1 and the second battery P2 in series connection can be realized. For example, when the first output terminal E1 and the second output terminal E2 are connected to an external power supply, the charging (high-voltage fast charging) of the first battery P1 and the second battery P2 in series connection can be realized, and the charging of the series connection can improve the charging efficiency; when the first output terminal E1 and the second output terminal E2 are connected to the load, the power supply of the first battery P1 and the second battery P2 in series connection can be realized to provide different output voltages.

Referring to FIG. 4, according to some embodiments of the present application, one end of the third switch K3 is connected to the first output terminal E1 through the first battery P1 and the first unidirectional conduction element D 1, and the other end of the third switch K3 is connected to the second output terminal E2 through the second battery P2 and the second unidirectional conduction element D2. In case that the third switch K3 is turned on, the first unidirectional conduction element D 1, the first battery P1, the third switch K3, the second battery P2, and the second unidirectional conduction element D2 are connected in series.

By turning on the third switch K3 and turning off the first switch K1 and the second switch K2, the power-up circuit of the first battery P1 and the second battery P2 in series connection can be realized. For example, when the first output terminal E1 and the second output terminal E2 are connected to an external power supply, the charging (high-voltage fast charging) of the first battery P1 and the second battery P2 in series connection can be realized, and the charging of the series connection can improve the charging efficiency. When the first output terminal E1 and the second output terminal E2 are connected to the load, the power supply of the first battery P1 and the second battery P2 in series connection can be realized to provide different output voltages. It should be understood that when the first battery P1 and the second battery P2 are charged in series or powered-up in series, the conduction directions of the first unidirectional conduction element D1 and the second unidirectional conduction element D2 are configured so as not to affect the normal operation of the first battery P1 and the second battery P1, respectively.

Referring to FIG. 3 and FIG. 4, according to some embodiments of the present application, the battery system further comprises: a fourth switch K4, which is connected in parallel with the first unidirectional conduction element D1, and configured for short-circuiting the first unidirectional conduction element D1; and/or a fifth switch K5, which is connected in parallel with the second unidirectional conduction element D2, and configured for short-circuiting the second unidirectional conduction element D2.

When the first battery P1 and the second battery P2 are connected in parallel, a circulating current is generated in the loop formed by the first battery P1, the second battery P2, the first output terminal E1, and the second output terminal E2, due to a voltage difference between the first battery P1 and the second battery P2. When the quantities of electricity of the first battery P1 and the second battery P2 are relatively high (for example, greater than or equal to a preset threshold), the circulating current will cause the battery to be overcharged, causing problems such as battery damage, battery capacity decay, and reduced use safety. When the quantities of electricity of the first battery P1 and the second battery P2 are low (for example, less than a preset threshold), the circulating current is beneficial, which can balance the electric powers of the batteries (mutual charging by the circulating current). When the electrical device of the battery system is a vehicle, the brake of the vehicle will stop the driver from working. In such condition, the driver connected to the battery system can act as a charging device to reversely charge the battery (brake back charging). When the quantity of electricity of the battery is high, the brake back charging current will cause the battery to overcharge; and when the quantity of electricity of the battery is low, the brake back charging current is beneficial, which is conducive to the recovery of electric energy.

By turning off or turning on the fourth switch K4 and the fifth switch K5, the battery system can be controlled to realize different functions. For example, when the first switch K1 and the second switch K2 are turned off and the third switch K3, the fourth switch K4 and the fifth switch K5 are turned on, the charging (high-voltage fast charging) of the first battery P1 and the second battery P2 in series connection can be realized. When the first switch K1, the second switch K2, the fourth switch K4, the fifth switch K5 are turned on and the third switch K3 is turned off, the charging of the first battery P1 and the second battery P2 in parallel connection can be realized. When the quantities of electricity of the first battery P1 and the second battery P2 are relatively high (for example, greater than or equal to the preset threshold), by turning on the first switch K1, the second switch K2 and turning off the third switch K3, and turning off one or all of the fourth switch K4 and the fifth switch K5, the power supply in parallel connection that avoids the circulating current can be realized. When the first battery P1 and the second battery P2 are low (for example, less than the preset threshold), by turning on the first switch K1, the second switch K2, the fourth switch K4 and the fifth switch K5 and turning off the third switch K3, the power supply in parallel connection that allows mutual charging of the circulating current and brake back charging.

According to some embodiments of the present application, the first unidirectional conduction element D1 and/or the second unidirectional conduction element D2 comprise one or more of a diode, a thyristor, and an insulated gate bipolar transistor.

That the first unidirectional conduction element D1 and/or the second unidirectional conduction element D2 comprises one or more of a diode, a thyristor, and an insulated gate bipolar transistor means that a unidirectional conduction circuit with the function of only allowing current to be conducted in one direction is formed based on one of a diode, a thyristor, and an insulated gate bipolar transistor, or a combination thereof.

Utilizing the unidirectional conduction functions of the first unidirectional conduction element D1 and/or the second unidirectional conduction element D2 can prevent the formation of a circulating current between the first battery P1 and the second battery P2 in parallel connection when necessary.

Referring to FIG. 3 and FIG. 4, some embodiments of the present application provide a control method for a battery system, and the battery system comprises: a first output terminal E1, a second output terminal E2, a first battery P1, a second battery P2, a first unidirectional conduction element D1, and a second unidirectional conduction element D2. The control method comprises: controlling the first battery P1 and the second battery P2 to be connected in parallel between the first output terminal E1 and the second output terminal E2, in which, a first electrode of the first battery P1 and a first electrode of the second battery P2 are connected to the first output terminal E1, and a second electrode of the first battery P1 and a second electrode of the second battery P2 are connected to the second output terminal E2. The first battery P1 and the first unidirectional conduction element D1 are connected in series between the first output terminal E1 and the second output terminal E2. The second battery P2 and the second unidirectional conduction element D2 are connected in series between the first output terminal E1 and the second output terminal E2. The first unidirectional conduction element D1 has a first conduction direction in a loop formed between the first output terminal E1 and the second output terminal E2, and the second unidirectional conduction element D2 has a second conduction direction in the loop formed between the first output terminal E1 and the second output terminal E2, and the first conduction direction is opposite to the second conduction direction.

Hereinafter, the first output terminal E1, the second output terminal E2, the first battery P1, the second battery P2, the first unidirectional conduction element D 1, and the second unidirectional conduction element D2, the first conduction direction, the second conduction direction comprised in the battery system, as well as the first switch K1, the second switch K2, the third switch K3, the fourth switch K4, and the fifth switch K5 which will be explained below are similar those described in the above with reference to FIGS. 3 and 4, and will not be repeated here.

Since the first unidirectional conduction element D1 and the second unidirectional conduction element D2 are arranged in the loop of the first battery P1 and the second battery P2, and the conduction direction of the first unidirectional conduction element D1 is opposite to the conduction direction of the second unidirectional conduction element D1, the circulating current and the overcharge of the batter can be prevented, which improves the service lives of the batteries, and reduces the potential safety hazard. Moreover, the first unidirectional conduction element D1 and the second unidirectional conduction element D2 will not affect the parallel connection of the first battery P1 and the second battery P2 to provide the electric energy, and the circuit structure is simple and easy to implement.

According to some embodiments of the present application, the battery system further comprises: a first switch K1 and a second switch K2. One electrode of the first battery P1 is connected to the first output terminal E1 or the second output terminal E2 corresponding to the one electrode of the first battery P1 via the first switch K1. One electrode of the second battery P2 is connected to the first output terminal E1 or the second output terminal E2 corresponding to the one electrode of the second battery P2 via the second switch K2. In addition, the step of controlling the first battery P1 and the second battery P2 to be connected in parallel between the first output terminal E1 and the second output terminal E2 comprises: turning on the first switch K1 and the second switch K2 to enable the first battery P1 and the second battery P2 to be connected in parallel.

By using the first switch K1 and the second switch K2 to control the connection state of the first battery P1 and the second battery P2, different power-up circuits can be realized, for example, when the first battery P1 is damaged (the second battery P2 is damaged), by turning on K1 and disconnecting K2 (disconnecting K1 and turning on K2), it is possible to realize power supply only through the first battery P1 (only through the second battery P2), so as to prevent the damaged battery from affecting the power-up circuit. Alternatively, the power supply of the first battery P1 and the second battery P2 in parallel connection can be realized by turning on the first switch K1 and the second switch K2.

Referring to FIG. 3, according to some embodiments of the present application, the battery system further comprises: a third switch K3, one end of the third switch K3 is connected to the second electrode of the first battery P 1, and the other end of the third switch K3 is connected to the first electrode of the second battery P2. The control method further comprises: turning on the third switch K3 to enable the first battery P1 and the second battery P2 to be connected in series.

By turning on the third switch K3, for example, charging (high-voltage fast charging) of the first battery P1 and the second battery P2 in series connection or power supply of the first battery P1 and the second battery P2 in series connection can be realized.

Referring to FIG. 3 and FIG. 4, according to some embodiments of the present application, the battery system further comprises a fourth switch K4 and a fifth switch K5, the fourth switch K4 is connected in parallel with the first unidirectional conduction element D1, and the fifth switch K5 is connected in parallel with the second unidirectional conduction element D2; and the control method further comprises: turning on the fourth switch K4 to short-circuit the first unidirectional conduction element D 1; and/or turning on the fifth switch K5 to short-circuit the second unidirectional conduction element.

By using the fourth switch K4 and the fifth switch K5 to selectively short-circuit the first unidirectional conduction element D1 and the second unidirectional conduction element D2, the battery system can be controlled to realize different functions. For example, by turning off the first switch K1 and the second switch K2 and turning on the third switch K3, the fourth switch K4 and the fifth switch K5, the charging (high-voltage fast charging) of the first battery P1 and the second battery P2 in series connection can be realized. By turning on the first switch K1, the second switch K2, the fourth switch K4, the fifth switch K5 and turning off the third switch K3, the charging of the first battery P1 and the second battery P2 in parallel connection can be realized. When the quantities of electricity of the first battery P1 and the second battery P2 are relatively high (for example, greater than or equal to the preset threshold), by turning on the first switch K1, the second switch K2 and turning off the third switch K3, and turning off one or all of the fourth switch K4 and the fifth switch K5, the power supply in parallel connection that avoids the circulating current can be realized. When the first battery P1 and the second battery P2 are low (for example, less than the preset threshold), by turning on the first switch K1, the second switch K2, the fourth switch K4 and the fifth switch K5 and turning off the third switch K3, the power supply in parallel connection that allows the mutual charging by the circulating current and brake back charging.

Referring to FIG. 4, according to some embodiments of the present application, the battery system further comprises: a first switch K1, a second switch K2, a third switch K3, a fourth switch K4, and a fifth switch K5. One electrode of the first battery P1 is connected to the first output terminal E1 or the second output terminal E2 corresponding to the one electrode of the first battery P1 via the first switch K1. One electrode of the second battery P2 is connected to the first output terminal E1 or the second output terminal E2 corresponding to the one electrode of the second battery P2 via the second switch K2. One end of the third switch K3 is connected to the first output terminal E1 through the first battery P1 and the first unidirectional conduction element D1, and the other end of the third switch K3 is connected to the second output terminal E2 through the second battery P2 and the second unidirectional conduction element D2. The fourth switch K4 is connected in parallel with the first unidirectional conduction element D1, and the fifth switch K5 is connected in parallel with the second unidirectional conduction element D2. The control method further comprises: in response to that the first switch K1 and the second switch K2 are turned on and the third switch K3 is turned off to enable the first battery P1 and the second battery P2 to be connected in parallel, and that a quantity of electricity of the battery system is determined to be less than a preset threshold, turning on the fourth switch K4 to short-circuit the first unidirectional conduction element D1, and turning on the fifth switch K5 to short-circuit the second unidirectional conduction element D2.

The determination of the quantity of electricity of the battery system to be less than the preset threshold may be determining that both the quantities of electricity of the first battery P1 and the second battery P2 of the battery system are less than a preset threshold. In some embodiments, the preset threshold may be 90% of a total quantity of electricity of the battery.

When the quantity of electricity of the battery system is less than the preset threshold, the circulating current between the first battery P1 and the second battery P2 and the brake back charging current are beneficial. Based on the short-circuit of the first unidirectional conduction element D1 and the second unidirectional conduction element D2 by the fourth switch K4 and the fifth switch K5, the circulating current and brake back charging current can be used to balance the electric powers of the batteries and recover the electric energy.

According to some embodiments of the present application, the control method further comprises: in response to determination of the battery system to satisfy a charging condition, turning off the first switch K1 and the second switch K2 and turning on the third switch K3 to enable the first battery P1 and the second battery P1 to be in series connection, and turning on the fourth switch K4 and the fifth switch K5 to charge the battery system.

The satisfying the charging condition may be that the quantities of electricity of the first battery P1 and the second battery P2 are both less than a preset threshold.

By turning off the first switch K1 and the second switch K2 and turning on the third switch K3, the fourth switch K4, and the fifth switch K5, the charging (high-voltage fast charging) of the first battery P1 and the second battery P2 in series connection can be realized, which can improve charging efficiency.

According to some embodiments of the present application, the battery system further comprises: a first switch K1, a second switch K2, a third switch K3, a fourth switch K4, and a fifth switch K5. One electrode of the first battery P1 is connected to the first output terminal E1 or the second output terminal E2 corresponding to the one electrode of the first battery P1 via the first switch K1. One electrode of the second battery P2 is connected to the first output terminal E1 or the second output terminal E2 corresponding to the one electrode of the second battery P2 via the second switch K2. One end of the third switch K3 is connected to the first output terminal E1 through the first battery P1 and the first unidirectional conduction element D1, and the other end of the third switch K3 is connected to the second output terminal E2 through the second battery P2 and the second unidirectional conduction element D2. The fourth switch K4 is connected in parallel with the first unidirectional conduction element D1, and the fifth switch K5 is connected in parallel with the second unidirectional conduction element D2. The control method further comprises: in response to that the first switch K1 and the second switch K2 are turned on and the third switch K3 is turned off to enable the first battery P1 and the second battery P2 to be connected in parallel, and that a quantity of electricity of the battery system is determined to be greater than or equal to a preset threshold, turning off the fourth switch K4 and the fifth switch K5.

The determination of the quantity of electricity of the battery system to be greater than or equal to a preset threshold can be determining both the quantities of electricity of the first battery P1 and the second battery P2 of the battery system to be greater than or equal to the preset threshold. In some embodiments, the preset threshold may be 90% of the total battery charge.

By turning off the fourth switch K4 and the fifth switch K5, the first unidirectional conduction element D1 and the second unidirectional conduction element D2 can be used to prevent damage to the battery caused by the circulating current.

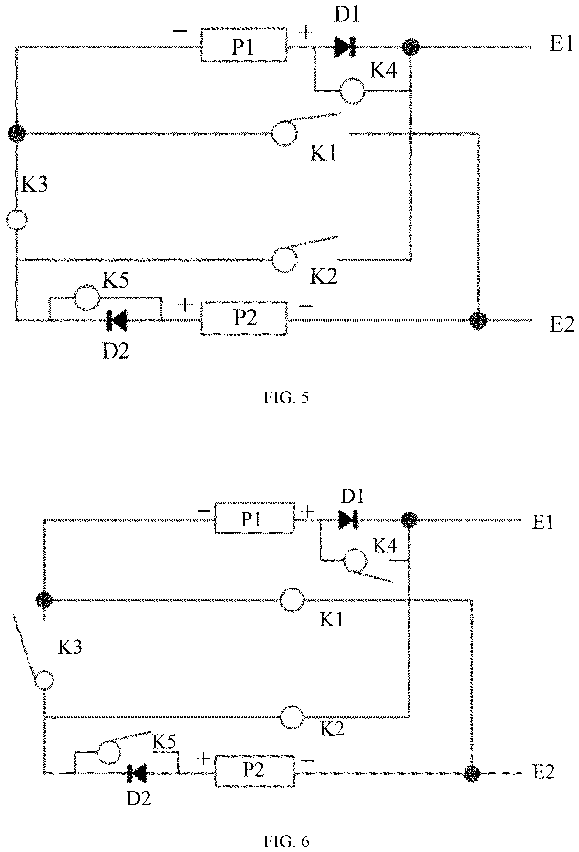

FIGS. 5-7 are schematic circuit diagrams of battery systems according to some embodiments of the present application. Referring to FIGS. 5-7, in specific embodiments, the battery system according to embodiments of the present application may comprise: a first output terminal E1, a second output terminal E2, a first battery P1, a second battery P2, a first unidirectional conduction element D 1, a second unidirectional conduction element D2, a first switch K1, a second switch K2, a third switch K3, a fourth switch K4, and a fifth switch K5. When the first switch K1 and the second switch K2 are turned on, the first battery P1 and the second battery P2 are connected in parallel; when the third switch is turned on, the first battery P1 and the second battery P2 are connected in series, and the fourth switch K4 and the fifth switch K5 are configured to short-circuit the first unidirectional conduction element D1 and the second unidirectional conduction element D2, respectively.

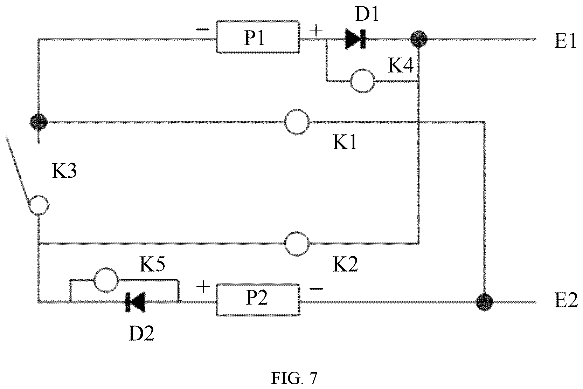

In this embodiment, the control method for the battery system may comprise: in response to that the quantity of electricity of the first battery P1 and the quantity of electricity of the second battery P2 are lower than the first threshold, controlling the first switch K1 and the second switch K2 to be turned off and the third switch K3, the fourth switch K4, and the fifth switch K5 to be turned on, to allow the first battery P1 and the second battery P2 to be charged in series (FIG. 5); or alternatively, in response to that the quantity of electricity of the first battery P1 and the quantity of electricity of the second battery P2 are higher than a second threshold, controlling the first switch K1 and the second switch K2 to be turned on and the third switch K3, the fourth switch K4, and the fifth switch K5 to be turned off, to allow the first battery P1 and the second battery P2 to supply power in parallel under the condition of preventing the circulating current (FIG. 6); or alternatively, in response to that the quantity of electricity of the first battery P1 and the quantity of electricity of the second battery P2 are lower than the second threshold, controlling the first switch K1, the second switch K2, the fourth switch K4, and the fifth switch K5 to be turned on and the third switch K3 to be turned off, to enable the first battery P1 and the second battery P2 to supply power in parallel under the condition of allowing mutual charging by the circulating current and brake back charging (FIG. 7).

It can be understood that, according to the battery system and the control method for the battery system according to the embodiments of the present application, different power supplying modes and charging modes can be realized. When the quantity of electricity of the battery is relatively high, the circulating current and the brake back charging current are prevented from damaging the battery, and when the quantity of electricity of the battery is relatively low, the circulating current and the brake back charging current can be utilized to balance the electric powers of the batteries and recover the electric energy.

Some embodiments of the present application provide an electrical device, which comprises the battery system as described in the above embodiments, and the battery system is configured for providing an electric energy.

In some embodiments, the electrical device is a vehicle.

Some embodiments of the present application provide an electronic device, which comprises at least one processor; and a memory in communication connection with the at least one processor. The memory stores a computer program, which, when being executed by the at least one processer, causes the control method in the above-mentioned embodiments to be implemented.

Some embodiments of the present application provide a non-transitory computer-readable storage medium, storing a computer program, which, when being executed by a processer, causes the control method in the above-mentioned embodiments to be implemented.

It should be noted that at last: various embodiments in the above are only intended to illustrate the technical solution of the present application, rather than limitation. Although the application has been described in detail with reference to the above embodiments, those skilled in the art should understand that it is still possible to modify the technical solutions described in the above embodiments, or perform equivalent replacements for some or all of the technical features; and these modifications or replacements do not make the essence of the corresponding technical solutions deviate from the embodiments of the present application, and should be included in the scope of claims and the specification of the present application. In particular, as long as there is no structural conflict, the technical features mentioned in the various embodiments can be combined in any manner. The present application is not limited to the specific embodiments disclosed herein, but includes all technical solutions falling within the scope of the claims.

## Claims

1. A battery system, comprising:
a first output terminal and a second output terminal;
a first battery and a second battery, wherein a first electrode of the first battery and a first electrode of the second battery are connected to the first output terminal, a second electrode of the first battery and a second electrode of the second battery are connected to the second output terminal; and
a first unidirectional conduction element and a second unidirectional conduction element, wherein one electrode of the first battery is connected to the first output terminal or the second output terminal corresponding to the one electrode of the first battery through the first unidirectional conduction element; and one electrode of the second battery is connected to the first output terminal or the second output terminal corresponding to the one electrode of the second battery through the second unidirectional connection element;
wherein
the first unidirectional conduction element has a first conduction direction in a loop formed between the first output terminal and the second output terminal; the second unidirectional conduction element has a second conduction direction in the loop formed between the first output terminal and the second output terminal; and the first conduction direction is opposite to the second conduction direction.

2. The battery system according to claim 1, further comprising: a first switch and a second switch; wherein
one electrode of the first battery is connected to the first output terminal or the second output terminal corresponding to the one electrode of the first battery via the first switch;
one electrode of the second battery is connected to the first output terminal or the second output terminal corresponding to the one electrode of the second battery via the second switch; and
in case that the first switch and the second switch are turned on, the first battery and the second battery are enabled to be connected in parallel.

3. The battery system according to claim 1 or 2, further comprising: a third switch; wherein
one end of the third switch is connected to the second electrode of the first battery, and the other end of the third switch is connected to the first electrode of the second battery; and
in case that the third switch is turned on, the first battery and the second battery are enabled to be connected in series.

4. The battery system according to claim 3, wherein
one end of the third switch is connected to the first output terminal through the first battery and the first unidirectional conduction element, and the other end of the third switch is connected to the second output terminal through the second battery and the second unidirectional conduction element; and
in case that the third switch is turned on, the first unidirectional conduction element, the first battery, the third switch, the second battery, and the second unidirectional conduction element are connected in series.

5. The battery system according to any one of claims 1-4, further comprising:
a fourth switch, connected in parallel with the first unidirectional conduction element, and configured for short-circuiting the first unidirectional conduction element; and/or
a fifth switch, connected in parallel with the second unidirectional conduction element, and configured for short-circuiting the second unidirectional conduction element.

6. The battery system according to any one of claims 1-4, wherein the first unidirectional conduction element and/or the second unidirectional conduction element comprise one or more of a diode, a thyristor, and an insulated gate bipolar transistor.

7. A control method for a battery system, the battery system comprising: a first output terminal, a second output terminal, a first battery, a second battery, the first unidirectional conduction element, and the second unidirectional conduction element; the control method comprising:
controlling the first battery and the second battery to be connected in parallel between the first output terminal and the second output terminal;
wherein
a first electrode of the first battery and a first electrode of the second battery are connected to the first output terminal, and a second electrode of the first battery and a second electrode of the second battery are connected to the second output terminal; and
the first battery and the first unidirectional conduction element are connected in series between the first output terminal and the second output terminal; the second battery and the second unidirectional conduction element are connected in series between the first output terminal and the second output terminal; the first unidirectional conduction element has a first conduction direction in a loop formed between the first output terminal and the second output terminal, the second unidirectional conduction element has a second conduction direction in the loop formed between the first output terminal and the second output terminal, and the first conduction direction is opposite to the second conduction direction.

8. The control method according to claim 7, wherein
the battery system further comprises: a first switch and a second switch;
one electrode of the first battery is connected to the first output terminal or the second output terminal corresponding to the one electrode of the first battery via the first switch; and
one electrode of the second battery is connected to the first output terminal or the second output terminal corresponding to the one electrode of the second battery via the second switch; and
the step of controlling the first battery and the second battery to be connected in parallel between the first output terminal and the second output terminal comprises:
turning on the first switch and the second switch to enable the first battery and the second battery to be connected in parallel.

9. The control method according to claim 7 or 8, wherein
the battery system further comprises: a third switch;
one end of the third switch is connected to the second electrode of the first battery, and the other end of the third switch is connected to the first electrode of the second battery; and
the control method further comprises: turning on the third switch to enable the first battery and the second battery to be connected in series.

10. The control method according to any one of claims 7-9, wherein
the battery system further comprises a fourth switch and a fifth switch;
the fourth switch is connected in parallel with the first unidirectional conduction element, and the fifth switch is connected in parallel with the second unidirectional conduction element; and
the control method further comprises:
turning on the fourth switch to short-circuit the first unidirectional conduction element; and/or
turning on the fifth switch to short-circuit the second unidirectional conduction element.

11. The control method according to claim 7, wherein
the battery system further comprises: a first switch, a second switch, a third switch, a fourth switch, and a fifth switch;
one electrode of the first battery is connected to the first output terminal or the second output terminal corresponding to the one electrode of the first battery via the first switch;
one electrode of the second battery is connected to the first output terminal or the second output terminal corresponding to the one electrode of the second battery via the second switch;
one end of the third switch is connected to the first output terminal through the first battery and the first unidirectional conduction element, and the other end of the third switch is connected to the second output terminal through the second battery and the second unidirectional conduction element;
the fourth switch is connected in parallel with the first unidirectional conduction element, and the fifth switch is connected in parallel with the second unidirectional conduction element;
the control method further comprises:
in response to that the first switch and the second switch are turned on and the third switch is turned off to enable the first battery and the second battery to be connected in parallel, and that a quantity of electricity of the battery system is determined to be less than a preset threshold, turning on the fourth switch to short-circuit the first unidirectional conduction element, and turning on the fifth switch to short-circuit the second unidirectional conduction element.

12. The control method according to claim 11, wherein the control method further comprises:
in response to determination of the battery system to satisfy a charging condition, turning off the first switch and the second switch and turning on the third switch to enable the first battery and the second battery to be in series connection, and turning on the fourth switch and the fifth switch to charge the battery system.

13. The control method according to claim 7, wherein
the battery system further comprises: a first switch, a second switch, a third switch, a fourth switch, and a fifth switch;
one electrode of the first battery is connected to the first output terminal or the second output terminal corresponding to the one electrode of the first battery via the first switch;
one electrode of the second battery is connected to the first output terminal or the second output terminal corresponding to the one electrode of the second battery via the second switch;
one end of the third switch is connected to the first output terminal through the first battery and the first unidirectional conduction element, and the other end of the third switch is connected to the second output terminal through the second battery and the second unidirectional conduction element;
the fourth switch is connected in parallel with the first unidirectional conduction element, and the fifth switch is connected in parallel with the second unidirectional conduction element; and
the control method further comprises:
in response to that the first switch and the second switch are turned on and the third switch is turned off to enable the first battery and the second battery to be connected in parallel, and that a quantity of electricity of the battery system is determined to be greater than or equal to a preset threshold, turning off the fourth switch and the fifth switch.

14. An electrical device, comprising the battery system according to any one of claims 1-6, the battery system being configured for providing an electric energy.

15. The electrical device according to claim 14, wherein the electrical device is a vehicle.

16. An electronic device, comprising:
at least one processor; and
a memory, in communication connection with the at least one processor;
wherein
the memory stores a computer program, which, when being executed by the at least one processor, enables the control method according to any one of claims 7-13 to be implemented.

17. A non-transitory computer-readable storage medium, storing a computer program, which, when being executed by a processer, causes the control method according to any one of claims 7-13 to be implemented.
